Europäisches Patentamt

European Patent Office

Office européen des brevets

(19)

(11) **EP 0 720 016 A1**

(12) **EUROPÄISCHE PATENTANMELDUNG**

(43) Veröffentlichungstag:
03.07.1996 Patentblatt 1996/27

(51) Int. Cl.⁶: **G01N 21/89**

(21) Anmeldenummer: 95117496.0

(22) Anmeldetag: 07.11.1995

(84) Benannte Vertragsstaaten:
**BE DE DK ES FR GB IT LU NL SE**

(30) Priorität: 29.12.1994 DE 4447061

(71) Anmelder: **HÜLS AKTIENGESELLSCHAFT**
**D-45764 Marl (DE)**

(72) Erfinder:
• **Werner, Heinrich, Prof.-Dr.**
**D-34128 Kassel (DE)**

• **Schwengers, Hans-Peter, Dr.**
**D-46286 Dorsten (DE)**
• **Kneissel, Bernhard, Dr.**
**D-45772 Marl (DE)**
• **Klöppel, Bert, Dr.**
**D-34260 Kaufungen (DE)**
• **Werner, Carsten**
**D-34121 Kassel (DE)**

(54) **Verfahren zur Beurteilung der Druckqualität**

(57) Die Beurteilung der Bedruckbarkeitseigenschaften von Papieren erfolgt bisher vornehmlich durch die subjektive, visuelle Einstufung eines Druckmusters durch geschultes Fachpersonal. Das neue Verfahren soll bei verbesserter Handhabbarkeit und Wirtschaftlichkeit eine Beurteilung der Druckqualität an Druckmustern auf der Grundlage von meßtechnisch gewonnenen Informationen ermöglichen.

Das Druckbild eines Druckmusters wird mit Hilfe eines herkömmlichen Scanners erfaßt, digitalisiert, weiterverarbeitet und mit Hilfe eines trainierten Neuronalen Netzes bewertet. Um eine Übereinstimmung der Bewertung mit der visuellen Einstufung zu erreichen, wird das Neuronale Netz vor dem Meßbetrieb in einer Lernphase mit Hilfe von Druckstandards bekannter Einstufung trainiert.

Erkennen und Bewerten von Druckstörungen wie Mottling, Blistern oder Missing dots bevorzugt bei gestrichenen Papieren.

EP 0 720 016 A1

**Beschreibung**

Die Erfindung betrifft ein Verfahren zur Erkennung und Beurteilung der Druckqualität von bedrucktem Papier.

Die Erfindung bezweckt, ein neues Verfahren zur Qualitätskontrolle von Druckergebnissen bereitzustellen, das einerseits im Vergleich zu herkömmlichen Verfahren einfacher zu handhaben und wirtschaftlicher ist sowie andererseits Möglichkeiten zur Standardisierung der Qualitätskontrolle bietet.

Druckstörungen auf be- oder verdrucktem Papier können erst am fertigen Druckprodukt festgestellt und bewertet werden. Die Bewertung der Be- oder Verdruckbarkeitseigenschaften von Papier ist daher in der Praxis erst am Druckprodukt möglich. Wesentliche Druckstörungen und damit Bedruckbarkeitskriterien sind z. B. die Wolkigkeit des Druckbildes (auch "Mottling" genannt) oder speziell bei Tiefdruckprodukten fehlende Rasterpunkte ("missing dots"). Eine weitere wichtige Form einer Druckstörung am Druckprodukt ist die Blasenbildung, das "Blistern" ("blistering"), bei der Verdruckung (Verarbeitung) gestrichener Rollenoffsetpapiere. Da hier nicht die Bedruckbarkeit im eigentlichen Sinn, sondern die Eigenschaften des Papiers während des Druckens/Trocknens angesprochen werden, wird das Auftreten von Blistern auch als Verdruckbarkeitskriterium bezeichnet.

Die Beurteilung von Druckstörungen und damit der Be- oder Verdruckbarkeitseigenschaften von Papier erfolgt in der Praxis vornehmlich visuell durch Spezialisten, die eine Probe des Druckproduktes mit dem Auge gegen vorgegebene Standards mit bekannten, unterschiedlichen Bewertungsstufen oder -noten vergleichen und bewerten. Trotz der speziellen Schulung dieser Prüfer handelt es sich um ein subjektives Verfahren, das aus Mangel an exakt definierten Kriterien unterschiedliche Druckbewertungen unvermeidlich macht.

Seit einiger Zeit werden daher Versuche unternommen, hinsichtlich z. B. des Mottlings die Bedruckbarkeit von Papieren durch eine Beschränkung auf einige wenige, dafür aber exakt definierbare und erfaßbare Kriterien zu charakterisieren. Praast und Göttsching beispielsweise erfaßten die Bedruckbarkeitskriterien missing dots, Farbstand und Kontrast bei Tiefdruckprodukten mit einem Bildanalysator und untersuchten die Korrelation zwischen der Bewertung anhand der genannten Kriterien und der visuellen Einstufung der Drucke. Zwar wurde erwartungsgemäß eine enge Korrelation zwischen der Anzahl an fehlenden Rasterpunkten (missing dots) und der visuellen Einstufung beobachtet; Bemühungen, durch Berücksichtigung von Kontrast und Farbstand neben der Anzahl missing dots eine bessere Charakterisierung des visuellen Eindrucks zu erreichen, schlugen bisher fehl. (H. Praast; L. Göttsching: Analyse und Ursachen von Missing Dots im Tiefdruck. Das Papier 1 (1993), 12 - 19).

Diesen Versuchen einer physikalisch-meßtechnischen Erfassung der Bedruckbarkeit ist die Verwendung aufwendiger optischer Meßeinrichtungen gemeinsam, die in aller Regel den Einsatz von hochqualifiziertem Fachpersonal erfordert, zumal die Auswertung und Interpretation der gewonnenen digitalisierten Bildinformationen in vielen Fällen nur mit Hilfe aufwendiger Rechnerprogramme möglich ist.

Zur Beurteilung der Wolkigkeit ("Mottling") von Druckproben kann die Intensität des vom Druckbild reflektierten Lichts eines Lichtstrahls, der senkrecht auf die Papieroberfläche fällt, unter einem Winkel von 45 ° zur Oberfläche gemessen werden.

Ebenfalls bekannt ist, daß Neuronale Netze, deren Architektur sich am Aufbau des menschlichen Gehirns orientiert, in verschiedenen Bereichen zunehmend zur Qualitätskontrolle und zur Steuerung von Prozessen eingesetzt werden. Aus US-5 109 275 ist beispielsweise eine Vorrichtung mit einem Neuronalen Netz zur Signalkorrektur und Funktionsüberwachung für Drucker oder Farbkopierer bekannt.

Damit stellt sich die Aufgabe, ein Verfahren zur Beurteilung der Druckqualität von bedrucktem Papier und damit zur Beurteilung der Bedruckbarkeitseigenschaften des Papiers zu finden, das wirtschaftlich, bedienungsfreundlich und universell einsetzbar ist und das gleichzeitig auf der physikalisch-meßtechnischen Erfassung der Druckbildinformationen beruht.

Überraschenderweise wird diese Aufgabe gelöst durch ein Verfahren, dessen kennzeichnende Merkmale im Patentanspruch 1 angegeben sind. Bei diesem Verfahren wird die Druckbildinformation zunächst mit Hilfe eines Scanners erfaßt und in digitalisierter Form an eine Auswerteeinheit übergeben. Diese Auswerteeinheit enthält die Realisation eines Neuronalen Netzes. Die digitalen Druckbildinformationen werden in der Auswerteeinheit zunächst zumindest derart verarbeitet, daß sie vom Neuronalen Netz als Eingangsinformationsblock aufgenommen werden können. Das Neuronale Netz verarbeitet die Informationen weiter und liefert ein Ausgangssignal, das in eine Bewertungskennzahl umgesetzt wird, die nahezu ausnahmslos der Bewertung des Druckbilds durch eine visuelle Begutachtung entspricht. Um dieses nahezu ausnahmslose Übereinstimmen zwischen der visuellen Einstufung und dem Ausgangssignal des Neuronalen Netzes zu erreichen, wird das Neuronale Netz in einer zeitlich dem eigentlichen Meßbetrieb vorgelagerten Lernphase zunächst hinsichtlich der zu beachtenden Kriterien und ihrer Bewertung trainiert. Zu diesem Zweck werden Standarddrucke, denen visuell eine feste Bewertungskennzahl zugeordnet wurde, eingescannt und unter Vorgabe dieser Bewertungskennzahl vom Neuronalen Netz verarbeitet. Die Informationsverarbeitung im Neuronalen Netz wird so adaptiert, daß sich als Ausgangssignal die vorgegebene Bewertungskennzahl ergibt. Das System lernt, den visuellen Eindruck der Druckbilder und seine Bewertung zu erfassen. Um ein hohes Maß an Bewertungssicherheit zu erlangen, wird das Neuronale Netz in der Lernphase bevorzugt mit 5 bis 50 Standards aus jeder Bewertungsstufe trainiert. Die Übereinstimmung zwischen der Bewertung durch das Neuronale Netz und der visuellen Einstufung ist dann im allgemeinen bei 80 bis 100 %, zumeist 95 % bis 100 %, aller untersuchten Druckproben gegeben.

Zum Scannen der Druckproben oder Standards können herkömmliche (Farb-)Scanner der Büro- und Kommunikationstechnik verwendet werden, bevorzugt Flachbettscanner. Die Auflösung sollte bevorzugt 300 dpi nicht unterschreiten. Die Realisation des Neuronalen Netzwerkes kann schwerpunktmäßig hard- oder softwareseitig erfolgen. Bevorzugt ist die Implementierung auf einem handelsüblichen Personal Computer in Form von Kohonen-Feature-Maps und/oder von Backpropagation-Netzen.

Kohonen-Feature-Maps haben neben den Input-Neuronen eine Verarbeitungsschicht (die eigentliche Kohonen-Karte), in der die Neuronen in einem 1-, 2- oder 3-dimensionalen Raster angeordnet sind und jeweils einen Gewichtsvektor der Dimension des Eingabevektors haben. Als Antwort auf eine Eingabe wird das Neuron aktiviert, dessen Gewichtsvektor die größte Ähnlichkeit zum Eingabevektor hat. In der Lernphase werden alle Gewichtsvektoren von den zum aktiven Neuron benachbarten Neuronen ein Stück auf den Eingabevektor hin verändert. Der Effekt dieses Lernvorgangs ist, daß das Netzwerk selbstorganisiert und von der Ausgabe unabhängig eine interne Klassifikation von möglichen Eingabevektoren erstellt.

Die Netzausgabe kann nun über ein angehängtes Backpropagation-Netzwerk realisiert werden, das mit Hilfe eines der Backpropagation-Verfahren aus der Aktivität in der Kohonen-Karte die gewünschte Ausgabe eintrainiert. Bei diesem Verfahren wird der Fehler (Abweichung von der gewünschten Ausgabe) durch das Netz zurückgereicht, und die Gewichte werden so verändert, daß dieser Fehler bei einem neuerlichen Durchlauf verringert wird. Meist kommt man hier mit einer einzigen weiteren Neuronenschicht (der Output-Schicht) aus. In komplexen Fällen kann das Ausgabenetz als mehrschichtiges, vorwärts-verkettetes Netz verwirklicht werden.

Die Realisierung solcher Neuronalen Netzwerke erfordert einen erheblichen Aufwand an Gleitkomma-Arithmetik, so daß ein Betrieb derartiger Software ohne arithmetischen Coprozessor nicht empfohlen werden kann. Ferner sind derzeit 4 MB Hauptspeicher und mindestens 100 MB freie Plattenkapazität für die Aufnahme von Scannerbildern empfehlenswert.

Besonders bevorzugt wird das Programmpaket von Prof. Dr. H. Werner, Fachbereich Mathematik/Informatik, Universität Gesamthochschule Kassel, verwendet, das den Namen OPQUACONN1 trägt.

Um die Komplexität der Neuronalen Netze zu begrenzen, ist es vorteilhaft, die digitalen Druckbildinformationen nach dein Scannen gezielt aufzuarbeiten und zu bündeln. Bevorzugt erfolgt zunächst eine Kontrastverstärkung (bei farbigen Drucken in Kombination mit einer Farbunterdrückung). Hierzu wird beispielsweise jedes abgetastete Pixel mit einem angrenzenden Pixel verglichen (die Position des angrenzenden Pixels zum jeweils betrachteten Pixel ist vorgegeben und stets gleich). In Abhängigkeit davon, ob das angrenzende Pixel heller, dunkler oder gleichfarbig bezogen auf das betrachtete Pixel ist, wird dem betrachteten Pixel die Schattierung weiß, grau oder schwarz zugeordnet, wodurch die Farbe eliminiert und Konturen von Druckstörungen verstärkt abgebildet werden. In einfach gelagerten Fällen kann die Farbelimination ohne Kontrastverstärkung durch Abschneiden der Farbinformation eventuell nach Abrechnen der mittleren Farbstärke erreicht werden. Als weitere Möglichkeit können die drei Farbwerte R, G und B getrennt als Grauwerte interpretiert werden. Zur Weiterverarbeitung gelangt jeweils nur die Helligkeitsinformation (Graustufen).

Der Informationsgehalt der so gewonnenen Grauwertbilder kann in Folgeschritten weiter zusammengefaßt werden. Es wird bevorzugt eine feste Auswahl von Abtastbahnen auf dem Druckprobestreifen ausgewählt. Aus der Grauwertverteilung jeder Bahn kann insbesondere durch eine Auswahl aus den folgenden Vorverarbeitungsmethoden eine Folge von z. B. fünf (oder mehr) Eingabeparametern für die Neuronale Weiterverarbeitung gewonnen werden. Im folgenden bezeichne N die Anzahl der Pixel in einer Abtastbahn, und $p_1,...,p_N$ bezeichnen die Grauwerte der Pixel dieser Bahn. Als Komponenten für den Eingabevektor in das Netz kommen die Werte aus folgenden Vorverarbeitungen in Frage:

1. der mittlere Grauwert $G := (p_1+...+p_N)/N$

2. die k-ten Momente $M_k := (|G-p_1|^k+...+|G-p_N|^k)/N$ (k>0; besonders günstig ist k = 2, die Varianz)

3. die mittlere Differenz $D_k := (|p_2-p_1|^k+...+|p_N-P_{N-1}|^k)/(N-1)$ (k>0, besonders günstig ist k = 0,5)

Für die nächsten beiden Vorverarbeitungen werden Abschnitte $S_i:=\{p_i,...,p_{i+r}\}$ der Länge r<N betrachtet.

4. $G_i := (p_i+...+p_{i+r})/r$, d: Anzahl der $p_j>G_i$ in $S_i$

$$I_+ := \Sigma\{p_j^*j|\ p_j>G_i\} / d \qquad I_- := \Sigma\{p_j^*j|\ p_j<G_i\} / (r-d)$$

Schwerpunkte der über- bzw. unterdurchschnittlichen Grauwerte:

$$V_i := |I_+-I_-|; \text{Schrittweite} \qquad s := \min\{I_+, I_-\} + r/4,$$

dasselbe weiter mit der Folge $S_{i+s}$.

Man erhält den Wert $W_r$ als Mittelwert über alle so ermittelten $V_i$. Die günstigen Parameter r für diese Vorverarbeitungen korrelieren stark zur Größe von "Störungen" im gleichmäßigen Graubild.

5. Derselbe Algorithmus wie unter Punkt 4 mit der Variante:

$$V_i := (|p_i\text{-}G_i|^k + ... + |p_{i+r}\text{-}G_i|^k)/r.$$

Als günstig erwies sich dabei der Parameter k = 0,5.

Eine so gewonnene Wertfolge dient in einer bevorzugten Ausführung des Verfahrens als Eingabe in das Neuronale Netzwerk. Der Mittelwert aller Netzausgaben für die ausgewählten Abtastbahnen des Druckprobestreifens liefert die Information über die Bewertung des Streifens und über die Sicherheit dieser Bewertung.

Das erfindungsgemäße Verfahren bietet die folgenden Vorteile:

- Die Bearbeitungszeit zur Bewertung eines Druckprobestreifens beträgt im allgemeinen nur wenige Sekunden und wird vor allem durch den Scanvorgang bestimmt, insbesondere dann, wenn die Druckbildinformation durch die zuvor beschriebenen Schritte für das Neuronale Netz aufgearbeitet wird. Gleiches gilt für die Lernphase.

- Durch die bevorzugte Verwendung gängiger Vorrichtungen der Büro- und Kommunikationstechnik ist das Verfahren kostengünstig realisierbar.

- Der Verfahrensablauf kann auf einfache Weise automatisiert werden, so daß die Bedienung auch durch Nicht-Spezialisten möglich ist.

- Durch die Lernfähigkeit des Neuronalen Netzes kann das Verfahren an beliebige Anforderungs- und Bewertungsprofile angepaßt werden; die Bewertung kann dabei sowohl auf der Grundlage definierter Einzelkriterien erfolgen als auch ähnlich zur visuellen Einstufung auf dem Gesamteindruck beruhen. Das Verfahren kann so z. B. auch gezielt und bevorzugt auf das Erkennen von Blistern und/oder Mottling bei gestrichenen Offsetpapieren und/oder missing dots bei Tiefdruckprodukten trainiert werden.

- Kunden-, Papier- oder Druckverfahrens-spezifische Beurteilungskriterien können einfach und schnell berücksichtigt werden, da der Lernvorgang in der Regel in ca. 10 Stunden abgeschlossen ist. Auch ein nachträgliches, ergänzendes Wiederaufnehmen der Lernphase ist möglich.

- Einmal trainiert ist das Verfahren - anders als die visuelle Einstufung durch den Menschen - unabhängig von der "Tagesform".

- Das Verfahren bietet damit auch die Möglichkeit zum Aufbau eines standardisierten Qualitätskontroll- und Qualitätssicherungssystems, das Druckstörungen objektiv erfaßt und die Bedruckbarkeitseigenschaften eines Papiers bewertet.

- Das Verfahren kann zur Beurteilung von Labormustern und/oder Praxisdrucken verwendet werden.

- Es können bei gut trainierten Neuronalen Netzen sehr hohe Wiederfindungsraten (Reproduzierbarkeiten) erzielt werden.

- Die Übereinstimmung zwischen der Bewertung durch das Neuronale Netz und der visuellen Einstufung ist bei gut trainierten Neuronalen Netzen in 80 % bis 100 %, zumeist 95 % bis 100 %, aller Fälle gegeben.

Das Verfahren bietet aufgrund dieser Eigenschaften also überall dort inhaltliche und wirtschaftliche Vorteile, wo Druckbeurteilungen bisher visuell in der Qualitätssicherung durchgeführt wurden, also z. B. bei Herstellern von Rollen- oder Bogenoffsetpapieren oder Tiefdruckpapieren.

Das erfindungsgemäße Verfahren wird durch die folgenden Ausführungsbeispiele näher erläutert:

Beispiel 1: Lernvorgang

Die Software OPQUACONN1 wird auf einem handelsüblichen PC (Prozessor: Intel®-486, 4 MB Hauptspeicher; 100 MB freie Festplattenkapazität; Software: MS-DOS® und MS-WINDOWS®) installiert. Als Scanner dient ein HP Scanjet II c, der mit dem PC verbunden ist.

Der Lern- oder Prüfvorgang beginnt mit dem Einscannen der zu klassifizierenden Teststreifen. Die Benutzeroberfläche bietet dazu die Möglichkeit, mehrere Teststreifen (übliche Abmessung: 170 mm lang x 40 mm breit) in einem Scanvorgang einzulesen und unter individuellen Namen abzulegen. Diese Bilddateien sind dann die Grundlage für den Prüfvorgang oder beim Einrichten des Systems für den Trainingsvorgang.

Eine Bewertung wird immer für alle Streifen einer ganzen Serie vorgenommen und als Tabelle ausgegeben. Jeder Streifen wird zunächst einer Farbelimination unterworfen. Dazu wird das oben beschriebene Pixel-Vergleichsverfahren verwendet, das zusätzlich eine Kontrastverstärkung bewirkt. Die so entstandenen Grauwertbilder werden nun in 1-Pixel breite Bahnen orthogonal zur Orientierung des Teststreifens aufgeteilt und die so entstandenen Grauwertkurven einzeln bewertet.

Für die Bewertung der Bahnen mit den Noten 1 bis 6 werden 5 der oben angeführten Vorverarbeitungen ausgeführt, die dann für jede Bahn einen reellen Vektor der Dimension 5 als Eingabe in das Neuronale Netzwerk erzeugen. Das Neuronale Netzwerk liefert für die Abtastbahn dann eine Ausgabe der Dimension 6 (= Anzahl der möglichen Noten), in dem das Netz für jede Note mit einer Zahl zwischen 0 und 1 angibt, in welchem Maße dieser Bahn die jeweilige Note zukommt. Es kann zwischen einer Auswertung aller Bahnen jedes Streifens oder der Auswertung einer zufälligen Auswahl einer beschränkten Anzahl von Bahnen jedes Streifens gewählt werden. Die Ausgabe für einen Streifen ist dann der Mittelwert aller Einzelbewertungen der ausgewählten Bahnen.

In der Lernphase wird ein Standard-Streifenkontingent als Trainingsset eingesetzt, wobei allerdings der Scanvorgang noch um die Eingabe der für den Teststreifen gewünschten Note ergänzt wird. Für das Training kann die Berechnung der Netzeingabevektoren aus den Grauwertbildern einmalig auch für alle späteren Trainingsläufe vorab geschehen und aufbewahrt werden; die Benotung kann in späteren Trainings läufen geändert werden.

Das Training der Kohonen-Karte (hier mit einem zweidimensionalen Raster) geschieht selbstorganisiert, also ohne Kenntnis der gewünschten Ausgabe, indem zunächst für jeden Eingabevektor das Neuron mit dem ähnlichsten Gewichtsvektor ermittelt wird (winner-take-all-Strategie) und darauf alle Gewichtsvektoren aller Neuronen in einer kleinen Umgebung des ermittelten Neurons um ein kleines Stück auf den Eingabevektor zu verändert werden. Nach einer genügend großen Zahl von Durchläufen (ca. 5 bis 50) aller Eingabevektoren hat die Karte eine Gewichtsverteilung, die auf alle Eingabevektoren mit einer Aktivität von wenigen Neuronen in einer kleinen Umgebung reagiert.

Logisch (aber nicht zeitlich) davon getrennt läuft das überwachte Lernen in der Output-Schicht ab. Hier ist das Lernen an dem gewünschten Output für die jeweilige Eingabe orientiert. Die Gewichte der Verbindungen von den aktiven Neuronen der Karte werden nach dem Backpropagation-Algorithmus so verändert, daß der Output sich auf die gewünschte Ausgabe hin bewegt. Das Training führt dazu, daß sich auf der Karte ganze zusammenhängende Gebiete mit gleicher Ausgabe bilden. Das Ausgabenetz besteht hier nur aus einer Ausgabeschicht (Perceptron).

Insgesamt werden hier in der Trainingsphase in jeder Notenstufe jeweils 20 Standard-Streifen verarbeitet.

Bei veränderten Anforderungen an das Bewertungssystem ist sowohl ein völlig neues Trainieren als auch ein Nachtrainieren möglich, allerdings ist dem neuen Trainieren aus Gründen der schnelleren und stabileren Konvergenz der Vorzug zu geben.

Beispiel 2: Prüfvorgang

Das in Beispiel 1 errichtete und trainierte Prüfsystem wird zur Beurteilung der Druckqualität einer Druckprobe eingesetzt. Es handelt sich um eine Offsetdruckprobe, die einseitig in der Farbe blau bedruckt ist und eine gewisse Wolkigkeit (Mottling) aufweist. Aus der Druckprobe werden fünf Prüfstreifen der in Beispiel 1 genannten Abmessungen herausgeschnitten und gemeinsam eingescannt. Die Verarbeitung der Druckbildinformationen und die Bewertung erfolgt wie im Beispiel 1 beschrieben für jeden Streifen durch Mittelung der Einzelbewertungen für alle Abtastbahnen eines Prüfstreifens. Je Streifen wird für jede Note eine Zahl zwischen 0 und 1 ausgegeben. Durch die Ausgabe einer Zahl zwischen 0 und 1 für jede Note erhält der Benutzer neben der Bewertungsnote selbst auch eine Information über die Güte der Bewertung und kann ggf. Tendenzen in der Benotung oder Schwächen im Trainingszustand des Neuronalen Netzes erkennen. Es werden folgende Werte ermittelt:

| Note | 1 | 2 | 3 | 4 | 5 | 6 |
|---|---|---|---|---|---|---|
| Streifen 1 | 0,09 | 0,06 | 0,12 | 0,08 | 0,92 | 0,12 |
| Streifen 2 | 0,07 | 0,11 | 0,10 | 0,13 | 0,89 | 0,18 |
| Streifen 3 | 0,13 | 0,09 | 0,15 | 0,09 | 0,90 | 0,11 |
| Streifen 4 | 0,06 | 0,10 | 0,02 | 0,12 | 0,20 | 0,87 |
| Streifen 5 | 0,10 | 0,12 | 0,09 | 0,08 | 0,94 | 0,10 |

Die Druckprobe wird damit insgesamt mit der Note 5 bewertet.

**Patentansprüche**

1. Verfahren zur Erkennung und Beurteilung der Druckqualität auf be-/verdrucktem Papier, gekennzeichnet durch

   a) das Erfassen und Digitalisieren des Druckbildes einer Druckprobe mit Hilfe eines Scanners,
   b) das Aufbereiten der digitalen Druckbildinformationen zu einem Eingangsinformationsblock für ein Neuronales Netz,
   c) die Erkennung und Beurteilung der Druckqualität an der Druckprobe sowie die Ausgabe einer Bewertungskennzahl durch das Neuronale Netz,

   wobei das Neuronale Netz mit Hilfe von Kalibrierdrucken (Standards) mit bekannter Bewertungskennzahl in zumindest einer einzigen zeitlich vorgeschalteten Lernphase durch das Ausführen der Verfahrensschritte a bis c unter Vorgabe der zu erzielenden Bewertungskennzahl trainiert wurde.

2. Verfahren nach Anspruch 1, gekennzeichnet durch

   - das Aufarbeiten der digitalen Druckbildinformationen durch Farbunterdrückung und/oder Kontrastverstärkung zu einem Grauwertbild,
   - das Überarbeiten des Grauwertbildes zu einem Eingangsinformationsblock für das Neuronale Netz.

3. Verfahren nach Anspruch 1 und 2, gekennzeichnet durch das Überarbeiten der Grauwertverteilung durch

   - Aufteilen der Grauwertbilder in 1-Pixel breite Bahnen,
   - Bestimmen des mittleren Grauwertes sowie weiterer geeigneter Parameter zur Charakterisierung der Grauwertverteilung für jede Bahn,
   - Übergabe des so gewonnenen mehr-dimensionalen Informationsblocks für jede Bahn als Eingangsgröße an das Neuronale Netz und Bewertung jeder Bahn durch das Neuronale Netz,

   wobei anschließend durch Mittelung der Einzelbewertungen aller Bahnen oder einer beschränkten Auswahl von Bahnen die Bewertung der gesamten Druckprobe erfolgt.

4. Verfahren nach einem der Ansprüche 1 bis 3, gekennzeichnet durch

   - das Scannen der Druckprobe mit einem handelsüblichen Scanner und/oder die Weiterverarbeitung der digitalen Druckbildinformationen bis zur Ausgabe der Bewertungskennzahl mit Hilfe eines handelsüblichen Personal Computers.

5. Verfahren nach einem der Ansprüche 1 bis 4, gekennzeichnet durch

- das Implementieren des Neuronalen Netzes als Software auf einem Personal Computer in Form einer Kohonen-Feature-Map und/oder eines Backpropagation-Netzes.

6. Verfahren nach einem der Ansprüche 1 bis 5,
   gekennzeichnet durch

   - das Trainieren des Neuronalen Netzes in jeder Bewertungsstufe jeweils mit 5 bis 50 Kalibrierdrucken (Standard-Streifen) mit einer bekannten und der Bewertungsstufe entsprechenden Bewertungskennzahl.

7. Verwendung des Verfahrens nach Anspruch 1 zur Beurteilung der Bedruckbarkeitseigenschaften von Rollen- und Bogenoffsetpapieren, bevorzugt zur Beurteilung der Wolkigkeit ("Mottling").

8. Verwendung des Verfahrens nach Anspruch 1 zur Beurteilung der Bedruckbarkeitseigenschaften von Tiefdruckpapieren, bevorzugt zur Erkennung und Beurteilung von fehlenden Druckpunkten ("Missing dots").

9. Verwendung des Verfahrens nach Anspruch 1 zur Beurteilung der Bedruckbarkeitseigenschaften von gestrichenen Papieren.

10. Verwendung des Verfahrens nach Anspruch 1 zur Beurteilung der Verdruckbarkeitseigenschaften von gestrichenem Rollenoffsetpapier, bevorzugt hinsichtlich der Blasenbildung ("blistern").

Europäisches
Patentamt

**EUROPÄISCHER RECHERCHENBERICHT**

Nummer der Anmeldung

| | **EINSCHLÄGIGE DOKUMENTE** | | EP 95117496.0 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl.6) |
| A | DE - A - 3 819 183<br>(E. SICK GmbH.)<br>    * Zusammenfassung;<br>      Ansprüche; Fig. 1,2a-d *<br>-- | 1,3,4 | G 01 N 21/89 |
| A | GB - A - 2 243 212<br>(TOSHIBA)<br>    * Zusammenfassung;<br>      Ansprüche; Fig. 1,12,13 *<br>-- | 1,4 | |
| A | GB - A - 2 159 623<br>(DAI NIPPON)<br>    * Gesamt *<br>-- | 1 | |
| A | GB - A - 1 592 449<br>(FERRANT LIMITED)<br>    * Gesamt *<br>-- | 1 | |
| A | GB - A - 1 583 071<br>(GRETAG)<br>    * Ansprüche; Fig. 1-29 *<br>-- | 1 | RECHERCHIERTE SACHGEBIETE (Int. Cl.6) |
| A | GB - A - 1 498 419<br>(NEKOOSA PAPERS)<br>    * Ansprüche *<br>-- | 1 | G 01 N 21/00<br>G 01 N 33/00 |
| D,A | US - A - 5 109 275<br>(MOTOHIKO NAKA)<br>    * Zusammenfassung;<br>      Ansprüche; Fig. 3A *<br>-- | | |
| A | EP - A - 0 563 897<br>(FUJI)<br>    * Zusammenfassung;<br>      Seite 3, Zeile 55 -<br>      Seite 5, Zeile 23;<br>      Ansprüche; Fig. 1,29 *<br>-- | 1,3,4 | |
| A | EP - A - 0 536 570<br>(HANAFUS HIDYUKI) | 1 | |

Der vorliegende Recherchenbericht wurde für alle Patentansprüche erstellt.

| Recherchenort | Abschlußdatum der Recherche | Prüfer |
|---|---|---|
| WIEN | 08-01-1996 | ERBER |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

EP 0 720 016 A1

Europäisches
Patentamt

**EUROPÄISCHER RECHERCHENBERICHT**

Nummer der Anmeldung

-2-
EP 95117496.0

| | **EINSCHLÄGIGE DOKUMENTE** | | | KLASSIFIKATION DER ANMELDUNG (Int. Cl.6) |
|---|---|---|---|---|
| **Kategorie** | **Kennzeichnung des Dokuments mit Angabe, soweit erforderlich, der maßgeblichen Teile** | | **Betrifft Anspruch** | |
| | * Zusammenfassung; Ansprüche; Fig. 1-11 *<br>---- | | | |
| | | | | **RECHERCHIERTE SACHGEBIETE (Int. Cl.6)** |

Der vorliegende Recherchenbericht wurde für alle Patentansprüche erstellt.

| **Recherchenort** | **Abschlußdatum der Recherche** | **Prüfer** |
|---|---|---|
| WIEN | 08-01-1996 | ERBER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

9